# EUROPEAN PATENT SPECIFICATION

(11) **EP 1 279 485 B1**
(45) Date of publication and mention of the grant of the patent: **10.10.2007**
(21) Application number: 02255142.8
(22) Date of filing: 23.07.2002
(51) Int. Cl.: B29D 30/30, B29D 30/70, B60C 9/18, B60C 9/20

(54) **Method of producing a pneumatic tire having a reinforcement cord layer**
Verfahren zur Herstellung eines Luftreifens aufweisend eine kordverstärkte Schicht
Procédé de fabrication de peumatique contenant une couche renforcée par des cordes

(30) Priority: 23.07.2001 JP 2001221714
(43) Date of publication of application: 29.01.2003
(73) Proprietor: Bridgestone Corporation, Tokyo 104-0031 (JP)
(72) Inventor: Ohkubo, Yoshihiro Bridgestone Corporation, Kodaira City Tokyo (JP)
(74) Representative: Whalley, Kevin

(56) References cited:
- EP-A- 0 956 940
- EP-A- 1 048 445
- WO-A-02/24473
- US-A- 3 780 782
- US-A- 5 273 094
- PATENT ABSTRACTS OF JAPAN vol. 018, no. 274 (M-1611), 25 May 1994 (1994-05-25) -& JP 06 048111 A (TOYO TIRE & RUBBER CO LTD), 22 February 1994 (1994-02-22)
- PATENT ABSTRACTS OF JAPAN vol. 018, no. 398 (M-1645), 26 July 1994 (1994-07-26) -& JP 06 115311 A (BRIDGESTONE CORP), 26 April 1994 (1994-04-26)

## Description

The present invention relates to a method of producing pneumatic tires having reinforcement cord layers at least in the tire tread portion.

Typically, such a reinforcement cord layer is comprised of a rubber material and longitudinally oriented cords embedded in the rubber material, wherein the cords of the layer form a predetermined cord angle relative to the circumferential direction of the tire, as seen in a developed view of the cord layer. One type of the cord layer is disclosed in JP-06-48111A, wherein the cord angle is larger at the tread center portion than at the tread end portions, so as to improve high-speed durability and resistance to uneven wear without sacrifice of ride comfort. Another type of the cord layer is disclosed in JP-06-115311A, wherein the cord angle is smaller at the tread center portion than at the tread end portions, so as to improve the fuel consumption by suppressing the heat generation of the belt layer and rolling resistance.
A method and apparatus for forming a tire reinforcing layer is disclosed in EP-A-1048445.

While the provision of a reinforcement cord layer with predetermined cord angles relative to the circumferential direction of the tire brings about various functional advantages as mentioned above, it is often difficult from a practical viewpoint to achieve a precise setting of the cord angle during the green tire building process or the cord layer preparation process, and it is highly desirable to overcome such difficulty.

It is a general object of the present invention to provide a method of producing pneumatic tires having a reinforcement cord layer at least in the tread portion, which eliminates the problem of the prior art associated with the setting of the cord angle.

It is a more specific object of the present invention to provide a method of producing pneumatic tires having a reinforcement cord layer at least in the tread portion, which allows formation of the cord layer and control of the cord angle in a simple, positive and precise manner.

According to claim 1, there is provided a method of producing a pneumatic tire having a reinforcement cord layer at least in a tread portion, said cord layer being comprised of sheet members arranged side-by-side in a circumferential direction of the tire and formed by a process comprising the steps of:
- preparing a sheet member having a predetermined length by cutting a continuous cord strip in its longitudinal direction, said cord strip comprising a rubber material and longitudinally oriented cords embedded in the rubber material; and
- applying the sheet member onto an outer peripheral surface of a rotating support by (i) urging the sheet member onto the outer peripheral surface of a rotating support at a point that is moved in an axial direction of the support, wherein said support is rotated with a predetermined angular speed and said urging point is axially moved with a predetermined speed, and (ii) controlling at least one of said angular speed of the support and the speed of the urging point while the urging point is axially moved from one side of the support to the other, wherein the cords form a predetermined first angle at a center portion of the cord layer, and a predetermined second angle different from said first angle at side portions of the cord layer, said first angle and said second angle both being relative to a circumferential direction of the support.

The method further provides that the step of preparing a sheet member comprises the step of intermittently feeding a continuous cord strip over a predetermined distance corresponding to the predetermined length; the method further comprising supplying the sheet member through a guide toward the outer peripheral surface of the rotating support that is rotated about its center axis with a predetermined angular speed; wherein the sheet member is urged onto the outer peripheral surface of the rotating support by a pressure roller that is arranged adjacent to the guide and moved together with the guide in an axial direction of the support from its one side to the other; and at least one of said angular speed of the support and the speed of the pressure roller is controlled while the pressure roller is axially moved from one side of the support to the other.

With the above-mentioned method according to the present invention, first of all, a continuous cord strip comprising a rubber material and longitudinally oriented cords (e.g., 10 to 20 cords) embedded in the rubber material is cut in its longitudinal direction to prepare a sheet member having a predetermined length. Subsequently, the sheet member is applied onto the outer peripheral surface of a rotating support either directly or indirectly. In this instance, the support may be a rigid core having an outer peripheral shape that corresponds to an inner peripheral shape of the tire, a belt/tread drum for forming a belt/tread band, or a tire building drum having a center portion that can be radially expanded or retracted. Thus, when the support is a rigid core, for example, the sheet member is applied to form a carcass ply that extends across the tread portion of the tire, or to form a reinforcement belt layer on a carcass layer that has been prepared on the support in advance. When, on the other hand, the support is a tire building drum, the sheet member is applied with the drum center portion expanded radially outwards for a shaping of the carcass ply or the like.

The sheet member is applied to the support rotated with a predetermined angular speed, by urging the sheet member onto the outer peripheral surface of the support at a point that is moved in an axial direction of the support with a predetermined speed, and by simultaneously controlling the angular speed of the support and/or the moving speed of the urging point while the latter is axially moved from one side of the support to the other. The sheet member may be urged against the support by a pressure roller that is movable in the axial direction of the support. The speed control with respect to the support and/or the urging point (or the pressure roller) is performed so that, as seen in an developed view of the cord layer, the cords form a predetermined first cord angle at a center portion of the cord layer, and a predetermined second cord angle at side portions of the cord layer.

The above-mentioned steps are repeated a number of times depending upon the width of the sheet member, until the entire peripheral surface of the support is fully covered by the sheet members that are successively arranged side-by-side, while intermittently feeding the cord strip over a predetermined distance that corresponds to the length of the sheet member, thereby completing formation of the reinforcement cord layer with a desired cord angle in a simple, positive and precise manner.

According to the present invention, therefore, it is possible readily to realize a cord layer of which the cords extend with a desired cord angle relative to the circumferential direction of the tire, as seen in a developed view of the cord layer, depending upon various design requirements in terms of intended function of the cord layer. Thus, for example, the first angle of the cords at the center portion of the cord layer may be larger than the second angle of the cords at the side portions of the cord layer. Conversely, the first angle of the cords at the center portion of the cord layer may be smaller than the second angle of the cords at the side portions of the cord layer.

When the rotating support is comprised of a tire building drum or a rigid support as mentioned above, having a crown portion in its cross-section, it is important to take into account the peripheral speed of the support which changes in the axial direction if the support is rotated at a constant angular speed during formation of the cord layer, due to the diameter of the support which changes in the axial direction. In this instance, if the urging point of the sheet member or the position of the pressure roller were moved axially of the support with a constant speed, the cord angle at the side portions of the cord layer would be relatively large due to a relatively small diameter and relatively small peripheral speed of the side portions of the support, and the cord angle at the center portion of the cord layer would be relatively small due to relatively large diameter and peripheral speed of the center portion of the support.

According to the present invention, however, an appropriate speed control with respect to the support and/or the urging point (or the pressure roller) may be performed thereby making it readily possible to realize a cord layer wherein the first cord angle at the center portion of the cord layer is larger than the second cord angle at the side portions of the cord layer, if necessary.

The present invention will now be explained in further detail hereinafter, with reference to a preferred embodiment shown in the accompanying drawings.

FIG. 1 is a front view showing one example of the apparatus suitable for carrying out the method according to the present invention.

FIG. 2 is a plan view of the apparatus shown in FIG. 1.

FIG. 3 is a side view of the apparatus shown in FIG. 1.

FIG. 4 is a schematic view showing one embodiment of the present invention wherein the cord angle is changed stepwise as the pressure roll is moved from one side to the other of the rotating support.

FIG. 5A is a schematic perspective view showing another embodiment which is not however of the present invention as applied to a support having a crown portion, for maintaining a constant cord angle over the entire width of the cord layer.

FIG. 5B is a graph showing the relationship between the moving speed and the axial position of the pressure roll relative to the rotating support, in the embodiment of FIG. 5A.

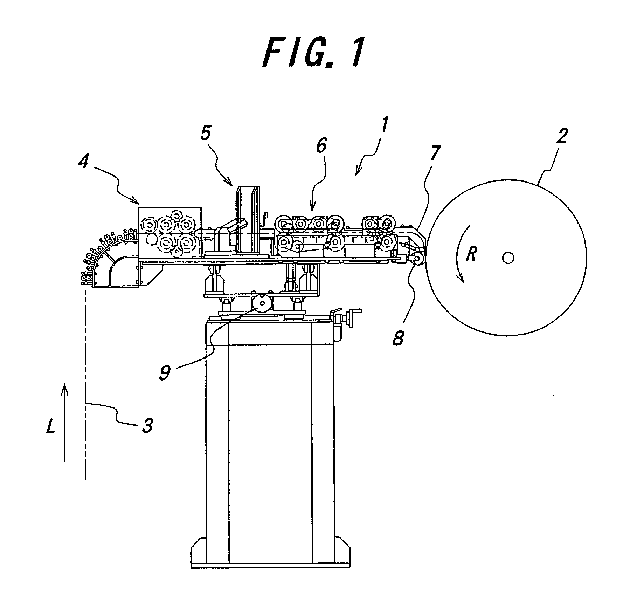

Referring now to the drawings, FIGS. 1 to 3 show one example of an apparatus suitable for carrying out the method according to the present invention, which is generally denoted by reference numeral 1. The apparatus 1 includes a rotatable support 2 that may be in the form of a substantially cylindrical drum that can be rotated in the direction as indicated by arrow R in FIGS. 1 to 3, under a controlled angular speed. The support 2 has a flat outer peripheral surface 2a for forming a cord layer thereon.

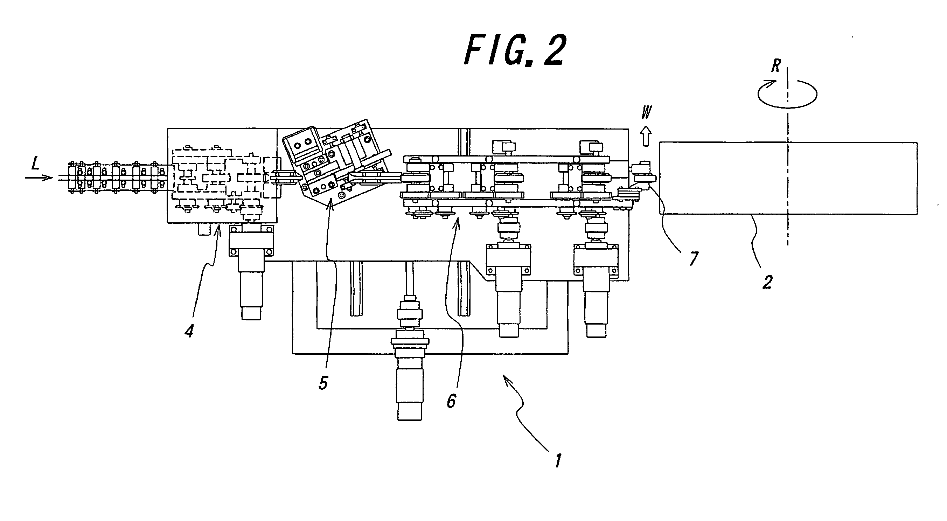

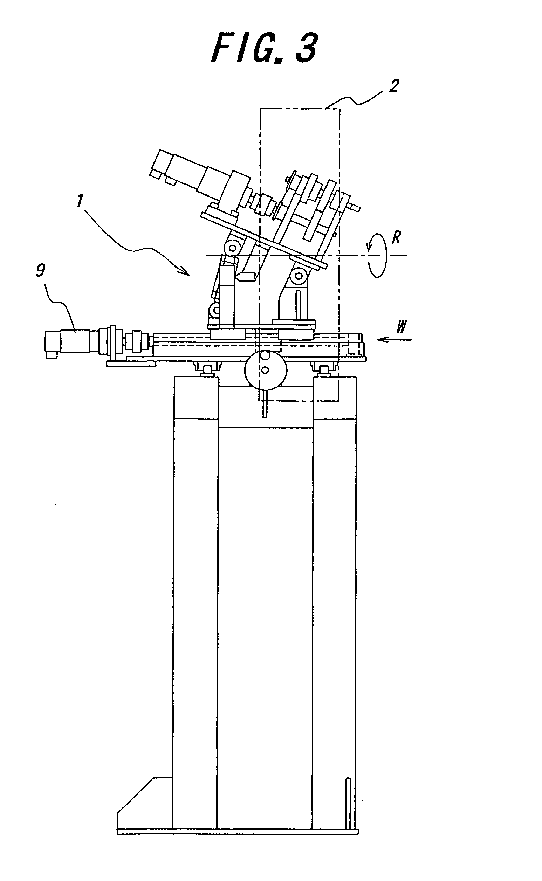

A continuous cord strip 3 is unwound from a reel, not shown, and intermittently fed over a predetermined distance by a feed mechanism 4, as shown by arrow L in FIGS. 1 and 2. The cord strip 3 is comprised of a thin rubber material and a plurality of cords, e.g. 10 to 20 cords, which are longitudinally oriented and embedded in the rubber material. The cord strip 3 is cut in its longitudinal direction by a cutting mechanism 5 that is arranged on the downstream side of the feed mechanism 4, to prepare a sheet member 3A having a predetermined length. The sheet member 3A is supplied onto the outer peripheral surface 2a of the rotating support 2 either directly or indirectly, by a supply mechanism 6 that is arranged on the downstream side of the cutting mechanism 5. It is assumed that the sheet member 3A is supplied in a direction that forms a controlled angle relative to the circumferential direction of the support 2. The supply mechanism 6 includes, besides a plurality of supply roll pairs, a guide 7 and a pressure roll 8 which are arranged adjacent to each other and resiliently biased toward the support 2. The three mechanisms mentioned above, i.e. the feed mechanism 4, the cutting mechanism 5 and the supply mechanism 6, are mounted on a common carriage 9 that can be moved in the axial direction of the support 2, as indicated by arrow W in FIGS. 2 and 3. Although not shown in the drawings, it is noted that the support 2 and the carriage 9 are driven by respective drives, such as servomotors, which are controlled by a common controller.

The sheet member 3A supplied to the supply mechanism 6 is guided by the guide 7 and urged by the pressure roll 8 toward the outer peripheral surface 2a of the rotating support 2, while the support 2 is rotated under a controlled angular speed and the carriage 9 is moved in the axial direction of the support 2 under a controlled moving speed. The sheet member 3A is thereby urged by the pressure roll 8 against the outer peripheral surface 2a of the rotating support 2, at a point that is moved in the axial direction of the support 2, along with the axial movement of the carriage 9 together with the guide 7 and the pressure roll 8. As a result, the sheet member 3A is gradually applied onto the outer peripheral surface 2a of the rotating support 2 so as to extend obliquely with reference to the circumferential direction of the support 2 from one side thereof to the other.

After a sheet member 3A of predetermined length has been applied to the outer peripheral surface 2a of the rotating support 2, the pressure roll 8 together with the guide 7 is retracted away from the support 2, and the carriage 9 is axially moved back to its initial position, and the support 2 is simultaneously rotated in a reverse direction to an angular position where the application of a next sheet member 3A onto the support 2 is to be initiated. Then, the above-mentioned process steps are repeated until the entire peripheral surface 2a of the support 2 is fully covered by the sheet members 3A that are successively arranged side-by-side so as to complete formation of the reinforcement cord layer on the support 2.

During the application of the sheet members 3A onto the outer peripheral surface 2a of the rotating support 2, the angular speed of the support 2 and/or the moving speed of the pressure roll 8 is controlled at predetermined positions in the longitudinal direction of the sheet member 3A so that the sheet member 3A as applied may exhibit a discontinuous shape as a whole, instead of linear shape, as seen in a developed view of the cord layer.

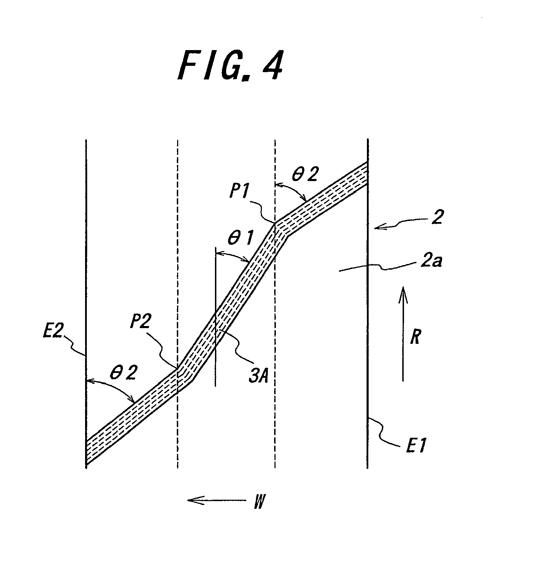

Thus, as shown in FIG. 4, for example, during the application of the sheet member 3A onto the outer peripheral surface 2a of the support 2, while the pressure roll 8 is moved in the axial direction from one side edge E1 to the other side edge E2 of the support 2, with a predetermined constant moving speed, the angular speed of the support is increased at a point P1 and decreased at another point P2 to the initial speed, both in a stepwise manner, assuming that the points P1 and P2 exist along the sheet member 3A, respectively. By this, the cords of the sheet member 3A form a relatively small angle θ1 with reference to the circumferential direction of the support 2, in the center portion of the cord layer defined between the two points P1 and P2, and a relatively large angle θ2 with reference to the circumferential direction of the support 2, in the side portions of the cord layer on both sides of the center portion, i.e. those portions defined between the side edge E1 of the cord layer and the point P1 along the sheet member 3A, and between the point P2 along the sheet member 3A and the opposite side edge E2 of the cord layer.

It is to be noted that the cord layer comprised of sheet members 3A having a discontinuous shape as shown in FIG. 4 can also be formed by maintaining a constant angular speed of the support 2 and decreasing the axial moving speed of the pressure roll 8 in the region of the sheet member 2 corresponding to the center portion of the cord layer, which is defined between the two points P1 and P2.

On the other hand, it is possible to form a cord layer with a relatively large cord angle θ1 in the center portion and a relatively small cord angle θ2 in the side portions, by decreasing the angular speed of the support 2 and/or increasing the moving speed of the pressure roll 8, both in the region of the sheet member 2 corresponding to the center portion of the cord layer, which is defined between the two points P1 and P2.

While the cord angle in the embodiment of FIG. 4 is changed at two points P1 and P2 in a stepwise manner, the present invention is not limited to such embodiment. Thus, for example, the cord angle may be changed at a single point or at more than two points in a stepwise manner, or may be gradually changed in a continuous manner.

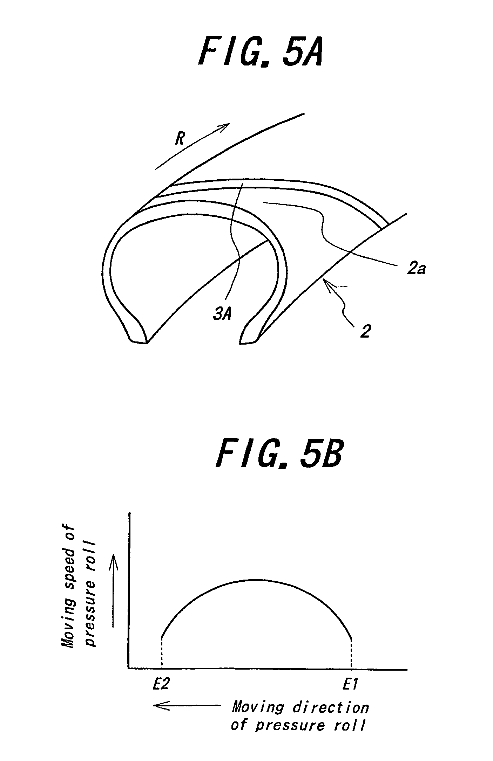

Another embodiment is shown in FIG. 5A, which is not however according to the present invention, is applied to formation of a cord layer on a rotating support 2 having a crown portion, for maintaining a constant cord angle over the entire width of the cord layer. In this instance, the support 2 may be a rigid core having an outer peripheral shape that corresponds to an inner peripheral shape of the tire, or a tire building drum having a center portion that can be radially expanded or retracted. Assuming that the support 2 is driven under a constant angular speed, the moving speed of the pressure roll 8 is gradually increased from one side edge E1 of the support 2 toward the center region and then gradually decreased from the center region toward the opposite side edge E2, as shown in FIG. 5B, so as to compensate for the difference in diameter and peripheral speed of the support 2 between its center region and side edges E1, E2, and thereby form a cord layer wherein the cord angles θ1, θ2 in the center portion and the side portions of the cord layer are substantially the same as each other.

It will be appreciated from the foregoing description that the present invention provides a method of producing pneumatic tires having a reinforcement cord layer at least in the tread portion, which allows formation of the cord layer and control of the cord angle in a simple, positive and precise manner.

While the present invention has been described above with reference to some preferred embodiments, they were presented by way of examples only.

Thus, for example, instead of cutting a continuous cord strip into a sheet member and subsequently applying the sheet member onto the rotating support as in the illustrated embodiments, it is also possible to form a desired cord layer with a desired cord angle arrangement by repeating the process steps wherein a predetermined length of the continuous cord strip, *per se*, is applied onto the rotating support and cut into a sheet strip after or during the course of such application.

## Claims

1. A method of producing a pneumatic tire having a reinforcement cord layer (3) at least in a tread portion, said cord layer (3) being comprised of sheet members (3a) arranged side-by-side in a circumferential direction of the tire and formed by a process comprising the steps of:
- preparing a sheet member (3a) having a predetermined length by cutting a continuous cord strip (3) in its longitudinal direction, said cord strip comprising a rubber material and longitudinally oriented cords embedded in the rubber material; and
- applying the sheet member (3a) onto an outer peripheral surface (2a) of a
- rotating support (2) by (i) urging the sheet member (3a) onto the outer peripheral surface (2a) of the rotating support (2) at a point that is moved in an axial direction of the support (2), wherein said support (2) is rotated with a predetermined angular speed and said urging point is axially moved with a predetermined speed, and (ii) controlling at least one of said angular speed of the support (2) and the speed of the urging point while the urging point is axially moved from one side of the support (2) to the other; wherein the cords form a predetermined first angle (θ1) at a center portion of the cord layer, and a predetermined second angle (θ2) different from said first angle (θ1) at side portions of the cord layer, said first angle and said second angle both being relative to a circumferential direction of the support (2).

2. The method as claimed in claim 1, wherein at least one of said angular speed of the support (2) and the speed of the urging point is controlled so that said first angle (θ1) formed by the cords at a center portion of the cord layer is larger than said second angle (θ2) formed at side portions of the cord layer.

3. The method as claimed in claim 1, wherein at least one of said angular speed of the support (2) and the speed of the urging point is controlled so that said first angle (θ1) formed by the cords at a center portion of the cord layer is smaller than said second angle (θ2) formed at side portions of the cord layer.

4. The method as claimed in any of claims 1 to 3, wherein said rotatable support (2) is one of (i) a rigid core having an outer peripheral shape (2a) that corresponds to an inner peripheral shape of the tire, (ii) a belt/tread drum for forming a belt/tread band, and (iii) a tire building drum having a center portion that can be radially expanded or retracted.

5. The method as claimed in claim 1, wherein the step of preparing a sheet member (3a) comprises the step of intermittently feeding a continuous cord strip (3) over a predetermined distance corresponding to the predetermined length; the method further comprising supplying the sheet member (3a) through a guide (7) toward the outer peripheral surface (2a) of the rotating support (2) that is rotated about its center axis with a predetermined angular speed;
wherein
the sheet member is urged onto the outer peripheral surface (2a) of the rotating support (2) by a pressure roller (8) that is arranged adjacent to the guide (7) and moved together with the guide (7) in an axial direction of the support (2) from its one side to the other; and
at least one of said angular speed of the support (2) and the speed of the pressure roller (8) is controlled while the pressure roller (8) is axially moved from one side of the support (2) to the other.

6. The method as claimed in claim 5, wherein at least one of said angular speed of the support (2) and the speed of the pressure roller (8) is controlled so that said first angle (θ1) formed by the cords at a center portion of the cord layer is larger than said second angle (θ2) formed at side portions of the cord layer.

7. The method as claimed in claim 5, wherein at least one of said angular speed of the support (2) and the speed of the pressure roller (8) is controlled so that said first angle (θ1) formed by the cords at a center portion of the cord layer is smaller than said second angle (θ2) formed at side portions of the cord layer.

8. The method as claimed in any of claims 5 to 9, wherein said rotatable support (2) is one of (i) a rigid core having an outer peripheral shape (2a) that corresponds to an inner peripheral shape of the tire, (ii) a belt/tread drum for forming a belt/tread band, and (iii) a tire building drum having a center portion that can be radially expanded or retracted.

## Patentansprüche

1. Verfahren zur Herstellung eines Luftreifens mit einer Verstärkungskordschicht (3) mindestens in einem Laufflächenabschnitt, wobei die Kordschicht (3) Schichtelemente (3a) aufweist, die nebeneinander in einer Umfangsrichtung des Reifens angeordnet sind und mittels eines Prozesses gebildet werden, der die folgenden Schritte aufweist:
- Herstellen eines Schichtelementes (3a) mit einer vorgegebenen Länge durch Schneiden eines kontinuierlichen Kordstreifens (3) in seiner Längsrichtung, wobei der Kordstreifen ein Gummimaterial und in Längsrichtung ausgerichtete Korde aufweist, die im Gummimaterial eingebettet sind; und
- Aufbringen des Schichtelementes (3a) auf eine äußere Umfangsfläche (2a) einer rotierenden Auflage (2) durch (i) Treiben des Schichtelementes (3) auf die äußere Umfangsfläche (2a) der rotierenden Auflage (2) an einer Stelle, die in einer axialen Richtung der Auflage (2) bewegt wird, wobei die Auflage (2) mit einer vorgegebenen Winkelgeschwindigkeit gedreht und der Antriebspunkt axial mit einer vorgegebenen Geschwindigkeit bewegt wird, und (ii) Steuern von mindestens einer von Winkelgeschwindigkeit der Auflage (2) und Geschwindigkeit des Antriebspunktes, während der Antriebspunkt axial von einer Seite der Auflage (2) zur anderen bewegt wird, wobei die Korde einen vorgegebenen ersten Winkel (θ1) in einem Mittelabschnitt der Kordschicht und einen vorgegebenen zweiten Winkel (θ2), abweichend vom ersten Winkel (θ1), an Seitenabschnitten der Kordschicht bilden,
wobei der erste Winkel und der zweite Winkel beide relativ zu einer Umfangsrichtung der Auflage (2) sind.

2. Verfahren nach Anspruch 1, bei dem mindestens eine von Winkelgeschwindigkeit der Auflage (2) und Geschwindigkeit des Antriebspunktes so gesteuert wird, dass der erste Winkel (θ1), der durch die Korde in einem Mittelabschnitt der Kordschicht gebildet wird, größer ist als der zweite Winkel (θ2), der an Seitenabschnitten der Kordschicht gebildet wird.

3. Verfahren nach Anspruch 1, bei dem mindestens eine von Winkelgeschwindigkeit der Auflage (2) und Geschwindigkeit des Antriebspunktes so gesteuert wird, dass der erste Winkel (θ1), der durch die Korde in einem Mittelabschnitt der Kordschicht gebildet wird, kleiner ist als der zweite Winkel (θ2), der an Seitenabschnitten der Kordschicht gebildet wird.

4. Verfahren nach einem der Ansprüche 1 bis 3, bei dem die rotierende Auflage (2) eine ist von: (i) einem starren Kern mit einer äußeren Umfangsform (2a), die einer inneren Umfangsform des Reifens entspricht; (ii) einer Gürtel/Laufflächen-Trommel für das Bilden eines Gürtel/Laufflächenbandes; und (iii) einer Reifenwickeltrommel, die einen Mittelabschnitt aufweist, der radial expandiert oder zurückgezogen werden kann.

5. Verfahren nach Anspruch 1, bei dem der Schritt des Herstellens eines Schichtelementes (3a) den Schritt des diskontinuierlichen Zuführens eines kontinuierlichen Kordstreifens (3) über eine vorgegebene Strecke entsprechend der vorgegebenen Länge aufweist; wobei das Verfahren außerdem das Zuführen des Schichtelementes (3a) durch eine Führung (7) in Richtung der äußeren Umfangsfläche (2a) der rotierenden Auflage (2) aufweist, die um ihre Mittelachse mit einer vorgegebenen Winkelgeschwindigkeit gedreht wird;
wobei
das Schichtelement auf die äußere Umfangsfläche (2a) der rotierenden Auflage mittels einer Druckwalze (8) getrieben wird, die benachbart der Führung (2) angeordnet ist und zusammen mit der Führung (7) in einer axialen Richtung der Auflage (2) von ihrer einen Seite zur anderen bewegt wird; und
mindestens eine von Winkelgeschwindigkeit der Auflage (2) und Geschwindigkeit der Druckwalze (8) gesteuert wird, während die Druckwalze (8) axial von einer Seite der Auflage (2) zur anderen bewegt wird.

6. Verfahren nach Anspruch 5, bei dem mindestens eine von Winkelgeschwindigkeit der Auflage (2) und Geschwindigkeit der Druckwalze (8) so gesteuert wird, dass der erste Winkel (θ1), der durch die Korde in einem Mittelabschnitt der Kordschicht gebildet wird, größer ist als der zweite Winkel (θ2), der an Seitenabschnitten der Kordschicht gebildet wird.

7. Verfahren nach Anspruch 5, bei dem mindestens eine von Winkelgeschwindigkeit der Auflage (2) und Geschwindigkeit der Druckwalze (8) so gesteuert wird, dass der erste Winkel (θ1), der durch die Korde in einem Mittelabschnitt der Kordschicht gebildet wird, kleiner ist als der zweite Winkel (θ2), der an Seitenabschnitten der Kordschicht gebildet wird.

8. Verfahren nach einem der Ansprüche 5 bis 9, bei dem die rotierende Auflage (2) eine ist von: (i) einem starren Kern mit einer äußeren Umfangsform (2a), die einer inneren Umfangsform des Reifens entspricht; (ii) einer Gürtel/Laufflächen-Trommel für das Bilden eines Gürtel/Laufflächenbandes; und (iii) einer Reifenwickeltrommel, die einen Mittelabschnitt aufweist, der radial expandiert oder zurückgezogen werden kann.

## Revendications

1. Procédé de production d'un bandage pneumatique comportant une couche de câblés de renforcement (3), au moins dans la partie de bande de roulement, ladite couche de câblés (3) comprenant des éléments de feuille (3a) juxtaposées dans une direction circonférentielle du bandage pneumatique et étant formée par un procédé comprenant les étapes ci-dessous :
- préparation d'un élément de feuille (3a) ayant une longueur prédéterminée en découpant une bande de câblés continue (3) dans sa direction longitudinale, ladite bande de câblés étant composée d'un matériau de caoutchouc et de câblés à orientation longitudinale noyés dans le matériau de caoutchouc ; et
- application de l'élément de feuille (3a) sur une surface périphérique externe (2a) d'un support rotatif (2) en (i) poussant l'élément de feuille (3a) sur la surface périphérique externe (2a) du support rotatif (2) au niveau d'un point déplacé dans une direction axiale du support (2), ledit support (2) étant tourné à une vitesse angulaire prédéterminée et ledit point de poussée étant déplacé axialement à une vitesse prédéterminée, et (ii) en contrôlant au moins une vitesse de ladite vitesse angulaire du support (2) et la vitesse du point de poussée pendant le déplacement axial du point de poussée d'un côté du support (2) vers l'autre, les câbles formant un premier angle prédéterminé (θ1) au niveau d'une partie centrale de la couche de câblés et un deuxième angle prédéterminé (θ2), différent dudit premier angle (θ1), au niveau des parties latérales de la couche de câblés, ledit premier angle et ledit deuxième angle étant formés par rapport à une direction circonférentielle du support (2).

2. Procédé selon la revendication 1, dans lequel au moins une vitesse de ladite vitesse angulaire du support (2) et la vitesse du point de poussée, est contrôlée de sorte que ledit premier angle (θ1) formé par les câblés au niveau de la partie centrale de la couche de câblés est plus grand que ledit deuxième angle (θ2) formé au niveau des parties latérales de la couche de câblés.

3. Procédé selon la revendication 1, dans lequel au moins une vitesse de ladite vitesse angulaire du support (2) et la vitesse du point de poussée, est contrôlée de sorte que ledit premier angle (θ1) formé par les câblés au niveau d'une partie centrale de la couche de câblés est plus petit que ledit deuxième angle (θ2) formé au niveau des parties latérales de la couche de câblés.

4. Procédé selon l'une quelconque des revendications 1 à 3, dans lequel ledit support rotatif (2) est constitué (i) par un noyau rigide ayant une forme périphérique externe (2a) correspondant à une forme périphérique interne du bandage pneumatique, (ii) un tambour pour la ceinture/la bande de roulement pour former une ceinture/une bande de roulement, et (iii) un tambour de confection d'un bandage pneumatique comportant une partie centrale pouvant être dilatée ou rétractée radialement.

5. Procédé selon la revendication 1, dans lequel l'étape de préparation d'un élément de feuille (3a) comprend l'étape de transfert intermittent d'une bande de câblés continue (3) sur une distance prédéterminée correspondant à la longueur prédéterminée ; le procédé comprenant en outre l'étape de transfert de l'élément de feuille (3a) à travers un guide (7) vers la surface périphérique externe (2a) du support rotatif (2) qui est tourné sur son axe central à une vitesse angulaire prédéterminé ;
dans lequel
l'élément de feuille est poussé sur la surface périphérique externe (2a) du support rotatif (2) par un rouleau de pression (8) agencé en un point adjacent au guide (7) et déplacé ensemble avec le guide (7) dans une direction axiale du support (2), d'un côté vers l'autre ; et
au moins une vitesse de ladite vitesse angulaire du support (2) et la vitesse du rouleau de pression (8), étant contrôlée pendant le déplacement axial du rouleau de pression (8)d'un côté du support (2) vers l'autre côté.

6. Procédé selon la revendication 5, dans lequel au moins une vitesse de ladite vitesse angulaire du support (2) et la vitesse du rouleau de pression (8) est contrôlée de sorte que ledit premier angle (θ1) formé par les câblés au niveau d'une partie centrale de la couche de câblés est plus grand que ledit deuxième angle (θ2) formé au niveau des parties latérales de la couche de câblés.

7. Procédé selon la revendication 5 dans lequel au moins une vitesse de ladite vitesse angulaire du support (2) et la vitesse du rouleau de pression (8) est contrôlée de sorte que ledit premier angle (θ1) formé par les câblés au niveau d'une partie centrale de la couche de câblés est plus petit que ledit deuxième angle (θ2) formé au niveau des parties latérales de la couche de câblés.

8. Procédé selon l'une quelconque des revendications 5 à 9, dans lequel ledit support rotatif (2) est constitué (i) par un noyau rigide ayant une forme périphérique externe (2a) correspondant à une forme périphérique interne d'un bandage pneumatique, (ii) un tambour pour ceinture/bande de roulement pour former une ceinture/une bande de roulement, et (iii) un tambour de confection d'un bandage pneumatique comportant une partie centrale pouvant être dilatée ou rétractée radialement.
